# EUROPÄISCHE PATENTSCHRIFT

(11) **EP 0 685 256 B1**
(45) Veröffentlichungstag und Bekanntmachung des Hinweises auf die Patenterteilung: **08.07.1998**
(21) Anmeldenummer: 95105879.1
(22) Anmeldetag: 20.04.1995
(51) Int. Cl.: B01J 2/06, F25C 1/00

(54) **Verfahren und Vorrichtung zum Granulieren von granulierbaren und/oder pelletierbaren Stoffen**
Process and device for granulating pelletizable materials
Procédé et installation pour la granulation des matériaux agglomérables

(30) Priorität: 31.05.1994 DE 4419010
(43) Veröffentlichungstag der Anmeldung: 06.12.1995
(73) Patentinhaber: Buse Gase GmbH & Co., D-53557 Bad Hönningen (DE)
(72) Erfinder: Laux, Peter, D-56826 Lutzrath (DE); Kosock, Stefan, D-47805 Krefeld (DE)
(74) Vertreter: Berdux, Klaus, Dipl.-Ing.

(56) Entgegenhaltungen:
- EP-A- 0 225 081
- EP-A- 0 445 786
- WO-A-89/10522
- DE-C- 4 329 110
- US-A- 4 329 787

## Beschreibung

Die Erfindung betrifft ein Verfahren zum Granulieren von granulierbaren und / oder pelletierbaren Stoffen nach dem Oberbegriff des Anspruchs 1 und eine für die Durchführung des Verfahrens geeignete Vorrichtung.

Als Stand der Technik gilt nach Art. 54(3)EPÜ die veröffentliche Anmeldung EP-A-0 641 522 der Anmelderin bei der ein Verfahren und eine für die Durchführung des Verfahrens geeignete Vorrichtung beschrieben werden, bei denen pelletierbare Flüssigkeiten durch Einleiten in einen wasserfallartigen Strom eines Kühlmittels pelletiert werden. Beim Auftreffen von Tropfen auf die Oberfläche des wasserfallartig strömenden Kühlmittels werden die Tropfen, die bevorzugt eine geringere Eintropfgeschwindigkeit haben als die Strömungsgeschwindigkeit des Kühlmittels, mitgerissen und somit vereinzelt. Ein Agglomerieren der Teilchen beim Einleiten kann somit unterbunden werden. Besonders vorteilhaft ist das Verfahren, wenn kleine Pellets erzeugt werden sollen, da bei geringem Platzbedarf hohe Durchsätze erzielt werden können.

Die US-PS 4 843,840 zeigt eine Vorrichtung für die Herstellung von gefrorenen, festen Partikeln, bei der die zu gefrierenden Flüssigkeiten mit einem Kühlmittel durch am oberen Ende in der Höhe verstellbare Rohrleitungen in eine Austragvorrichtung gefördert werden.

Mit dem Verfahren nach der EP-A-0 641 522 können Pellet-Produkte hergestellt werden, an deren Ausgangsmaterialien bestimmte Randbedingungen in Bezug auf Oberflächenspannung und Viskosität gestellt werden müssen. Somit können nicht alle Kundenanforderungen abgedeckt werden.

Der Erfindung liegt daher die Aufgabe zugrunde, ein Verfahren und eine Vorrichtung zu schaffen, mit der weitgehend unabhängig von der Viskosität und Oberflächenspannung der Ausgangsstoffe Granulate erzeugt werden können. Mit dem Verfahren sollen auch Stoffe verarbeitet werden können, die nicht pelletierbar sind und die einen sehr hohen Feststoff- bzw. Partikelanteil besitzen.

Ausgehend von dem im Oberbegriff des Anspruchs 1 berücksichtigten Stand der Technik, ist die Aufgabe erfindungsgemäß gelöst, mit den im kennzeichnenden Teil des Anspruchs 1 angegebenen Merkmalen. Vorteilhafte Weiterbildungen sind in den Unteransprüchen angegeben.

Überraschenderweise wurde nun gefunden, daß man Ausgangsstoffe weitgehend unabhängig von deren Viskosität und Oberflächenspannung granulieren kann, wenn man sie in einem geschlossenen Strahl in das bewegte Volumen eines Kühlmittels eintreten lässt. Hierbei wird der beim Eintritt in den beispielsweise wasserfallartigen Volumenstrom des Kühlmittels noch geschlossene Strahl durch die hohe Geschwindigkeit des Kühlmittelstromes und die dadurch auftretenden Kräfte zu Granulat zerrissen und dabei durch die Kälte des Kühlmittels, beispielsweise flüssiger Stickstoff, in der Formgebung fixiert und ausgefroren.

Durch das erfindungsgemäße Verfahren kann unabhängig von Viskosität und Oberflächenspannung gegenüber dem oben genannten Stand der Technik ein vielfach höherer Durchsatz erzielt werden. Durch das Eindringen des Strahles in ein Volumen wird ein im Vergleich zum Auftreffen auf eine Oberfläche wesentlich größeres Wärmeaustauschvermögen auf geringem Platz zur Verfügung gestellt. Da der Zerfall in Granulatpartikel nicht durch Zersprühen an einem Düsenboden, sondern durch das Kühlmittel erfolgt, kann auf aufwendige Eintragvorrichtungen wie Düsenbodenplatten, die je nach zu verarbeitendem Produkt sogar verstopfen können, verzichtet werden. Reinigungsarbeiten in größerem Umfang entfallen; vielmehr kann die Produkteintragvorrichtung durch Durchspülen eines Eintragrohres mit einem Spülmittel gereinigt werden. Ein Düsenwechsel bei Produktionswechsel entfällt, da keine speziell für das zu granulierende Produkt angepaßten Düsenböden verwendet werden müssen. Mit einem Flüssigkeitsstrahl können Feststoffpartikel problemlos eingeleitet und jede beliebige pumpbare Flüssigkeit verarbeitet werden. Durch das erfindungsgemäße Verfahren können auch Lebensmittel-Instantgranulate hergestellt werden, die beim Verbraucher in Pelletform keine Akzeptanz finden würden. Es wurde somit ein Verfahren geschaffen, daß auch optischen Produktanforderungen genügt. Ein weiterer Vorteil des erfindungsgemäßen Verfahrens ist, daß auch pasteuse, pumpfähige und extrudierbare Massen, sowie Stoffe mit Partikel- bzw. sehr hohem Feststoffanteil, sowie nicht pelletierbare Stoffe, wie stückige Güter, mit hohem Produktionsdurchsatz zu Granulat verarbeitet werden können.

Zwei Ausführungsbeispiele der Erfindung werden anhand der beigefügten Zeichnungen erläutert.

Es zeigt:
- Fig. 1: eine Vorrichtung für die Durchführung des erfindungsgemäßen Verfahrens in schematischer Form.
- Fig. 2: eine Abwandlung der Vorrichtung zu Figur 1.

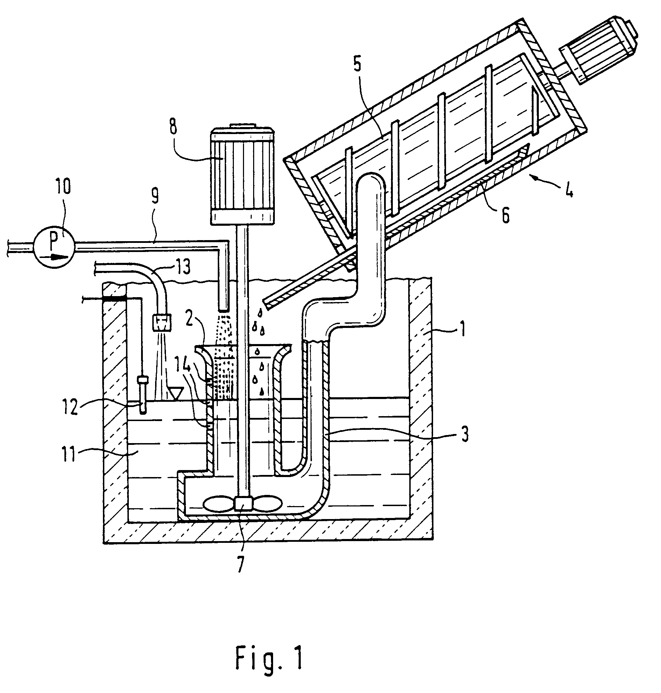

Die Figur 1 zeigt eine Vorrichtung bei der sich in einem Isolierbehälter 1 ein Reaktionsrohr 2 befindet, das vertikal angeordnet ist und am unteren Ende seitlich in ein Förderrohr 3 übergeht, welches mit seinem oberen Ende in eine Trennvorrichtung 4 mündet. Die Trennvorrichtung 4 besteht im wesentlichen aus einer Bandschnecke 5 mit Sieböffnungen. Unter der Bandschnecke 5 befindet sich eine Abführrinne 6, die in das Reaktionsrohr 2 mündet. Am Boden des Reaktionsrohres 2 befindet sich ein Förderelement 7, beispielsweise eine Propellerschraube, die über einen Motor 8 angetrieben wird. Oberhalb des Reaktionsrohres 2 befindet sich ein Produkteintrag 9 mit einer Förderpumpe 10. In dem Isolierbehälter 1 befindet sich ein flüssig-Stickstoff-Bad 11, dessen Füllhöhe durch eine Füllstandsregulierung 12 und eine flüssig-Stickstoff-Zufuhr 13 reguliert werden kann. Das flüssig-Stickstoff-Bad 11 ist durch Öffnungen 14 mit dem Innenraum des Reaktionsrohres 2 verbunden, so daß der Innenraum des Reaktionsrohres mit flüssigem Stickstoff versorgt wird.

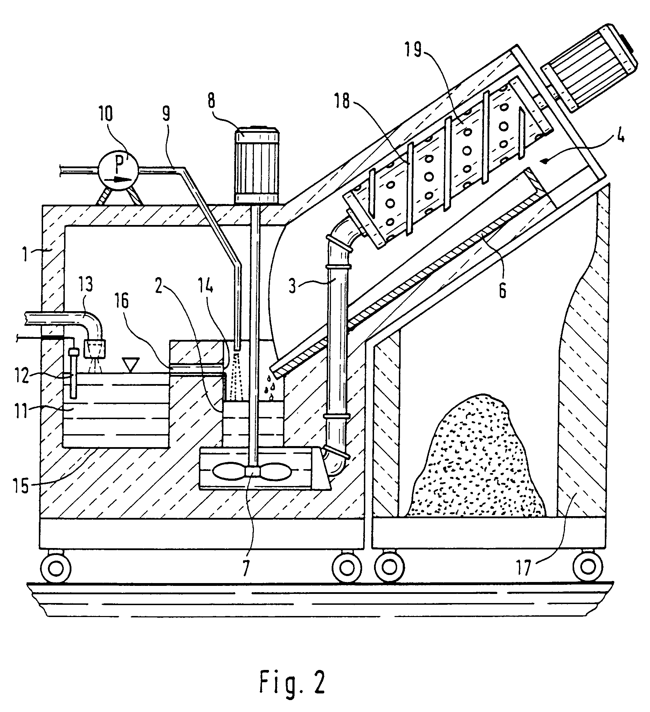

Figur 2 zeigt eine Vorrichtung, bei der die Kontrolle der Kühlmittelmenge im Reaktionsrohr 2 und somit im Kühlmittelkreislauf durch einen Ausgleichsbehälter 15 mit einer Verbindung 16 zum Reaktionsrohr 2 gewährleistet wird, der eine Füllstandsregulierung 12 und eine flüssig-Stickstoff-Zufuhr 13 besitzt. Die Füllung des Reaktionsrohres 2 ergibt sich aus der Füllstandsregulierung 12 in Verbindung mit verschiedenen Querschnitten der Öffnung 14 der Verbindung 16. Der Querschnitt kann durch verschiedene Einsätze verändert werden. Das granulierte Produkt wird in einen Auffangbehälter 17 gefördert. Als Trennvorrichtung wird bei dieser Ausführungsform eine Förderschnecke 18 mit Siebtrommel 19 verwendet.

Bei Betrieb wird nun das zu verarbeitende Produkt, beispielsweise eine pasteuse Masse, wie Brotansatz, mit einer Monopumpe 10, durch den Produkteintrag 9 in Form eines geschlossenen Strahls in das Reaktionsrohr 2 gefördert. Durch die Beaufschlagung des Strahls mit Druck sind hohe Fördermengen möglich. Der sich in dem Reaktionsrohr 2 befindliche flüssige Stickstoff wird durch den Propeller derart in Bewegung gesetzt, daß eine mit hoher Geschwindigkeit nach unten gerichtete Strömung des verflüssigten Gases entsteht, die durch das Förderrohr 3 in die Trennvorrichtung 4 abgeführt wird. Durch die Sieböffnungen der Bandschnecke 5 bzw. die Siebtrommel 19 der Förderschnecke 18 kann der flüssige Stickstoff auf die Abführrinne 6 fließen, die den flüssigen Stickstoff in einem Kreislauf wieder dem Reaktionsrohr 2 zuführt. Der erfindungsgemäß in einem geschlossenen Strahl eingeleitete Brotansatz wird durch die Turbulenzen und die hohe Geschwindigkeit des flüssigen Stickstoffes in Granulatpatikel zerrissen und durch die Kälte gefroren und in der Form fixiert. Die so gebildeten Granulatpartikel werden durch diese Strömung durch das Förderrohr 3 in die Bandschnecke 5 bzw. in die Förderschnecke 18 mit der Siebtrommel 19 eingetragen und in den Auffangbehälter 17 gefördert. Der überschüssige flüssige Stickstoff fließt erfindungsgemäß durch die Abführrinne 6 in das Reaktionsrohr 2 zurück und wird erneut dem Kühlmittelkreislauf zugeführt. Die Strömungsgeschwindigkeit des flüssig-Stickstoff-Volumens kann durch die Drehzahl des Propellers variiert werden. In einer bevorzugten Anwendungsform ist die Geschwindigkeit des bewegten flüssig-Stickstoff-Volumens größer, als die Eindringgeschwindigkeit des zu granulierenden Stoffes. Bevorzugt wird eine Kühlmittelgeschwindigkeit, die um den Faktor 1.5 bis 4 größer ist als die, des eingeleiteten zu granulierenden Stoffes. Sind Einleitgeschwindigkeit des zu granulierenden Stoffes und Strömungsgeschwindigkeit des flüssigen Stickstoffes gleich groß, so tragen nur noch die Turbulenzen der Kühlmittelströmung zur Granulierung bei wobei allerding ebenfalls noch brauchbare Ergebnisse erzielt werden. Da die Füllhöhe des Isolierbehälters 1 regulierbar und der Innenraum des Reaktionsrohres 2 durch Öffnungen 14 mit dem Isolierbehälter 1 verbunden ist, bzw. bei der Ausführungsform gemäß Fig. 2 mit dem Ausgleichsbehälter 15 durch die Verbindung 16 mit Kühlmittel gespeist wird, kann bei gegebener Strömungsgeschwindigkeit über verschiedene Füllstandshöhen eine unterschiedliche Strömungsstrecke und somit eine unterschiedlich Verweildauer erreicht werden. Der Isolierbehälter 1 fungiert somit genauso als Ausgleichsbehälter bezüglich der Kühlmittelmenge, die sich im Kreislauf befindet, wie der Ausgleichsbehälter 15 in Fig. 2. Selbstverständlich können außer flüssigem Stickstoff auch andere Kühlmittel verwendet werden. Je nach Produktionsmenge kann der Strahl des eingetragenen Produktes beliebig stark ausgebildet werden. Wahlweise können auch mehrere Produktstrahlen in das bewegte Flüssigkeitsvolumen eingetragen werden. Im Falle der Granulierung von Stoffen, die pasteuse Eigenschaften haben, hat der austretende Strahl die Form eines Stranges.

Das bewegte Kühlflüssigkeitsvolumen muß in seiner Strömung nicht parallel zur Einfluß- bzw. Einpressrichtung des zu verarbeitenden Produktes gerichtet sein, es ist auch eine Anordnung praktikabel, bei der eine Kühlmittelströmung in einem Winkel zur Einströmungsrichtung des zu granulierenden Stoffes vorliegt. Ebenso kann der zu granulierende Stoff in eine Kühlmitteltrombe oder in eine Strömung eingetragen werden, die rotierende Richtungsanteile aufweist.

Des weiteren können mit dem erfindungsgemäßen Verfahren beispielsweise auch folgende Produkte zu Granulaten verarbeitet werden:
- biologische Lösungen mit lebenden Mikroorganismen
- Starterkulturen (Lösungen mit ca. 20 % Feststoffanteil
- Eigelb ( ca. 30% Feststoff)
- Eiweiß
- Vollei
- Klärschlamm zum reaktivieren von Klärbecken nach Fehleinleitungen (mit Feststoffpartikeln 1-2 mm ⌀)
- Sauce Bolognaise (gewolfter Fleischanteil)
- Gulaschsuppe (mit Fleisch mit ca. 1,5 cm Kantenlänge)
- Erbsensuppe
- Linsensuppe
- Champignonsuppe mit geschnittenen Champignons
- Isopropanol
- Peroxid
- Flüssigaromen
- Fruchtmark
- Fruchtzubereitungen
- Extrudierbare Massen, wie eingedickte Bakterienkulturen z.B. Hefen
- pastöse Massen aus Roggenmehl, Wasser und Hefen, wie Brotansatz
- Extrakte, z.B. Hustensaftextrakt
- Kunststoffschmelzen, die beispielsweise für die Herstellung von Granulaten als Träger für Katalysatoren verwendet werden
- Kaffeekonzentrat.

## Patentansprüche

1. Verfahren zum Granulieren von granulierbaren und/oder pelletierbaren Stoffen, bei dem der zu granulierende Stoff aus mindestens einem Produkteintrag (9) in den Volumenstrom eines flüssigen Kühlmittels eingeleitet wird,
dadurch gekennzeichnet,
daß der zu granulierende Stoff aus dem Produkteintrag als geschlossener Strahl in das im wesentlichen in Strahlrichtung im Kreislauf strömenden Kühlmittel eingeführt wird, daß die Geschwindigkeit des Kühlmittelstromes gleich oder größer als die Eintraggeschwindigkeit des zu granulierenden Stoffes ist, und daß dabei der zu granulierende Stoff zerrissen und gefroren wird.

2. Verfahren nach Anspruch 1
dadurch gekennzeichnet,
daß die Geschwindigkeit des Kühlmittelstromes 1,5 bis 4 mal so groß ist, wie die Eintraggeschwindigkeit des zu granulierenden Stoffes.

3. Verfahren nach Anspruch 1 oder 2,
dadurch gekennzeichnet,
daß der zu granulierende Stoff in flüssigen Stickstoff eingeleitet wird.

4. Vorrichtung zur Durchführung des Verfahrens nach einem der Ansprüche 1 bis 3, bestehend aus einem Reaktionsrohr (2), Förderelement (7) und einer Produkteintragvorrichtung (9) über dem oberen Ende des Reaktionsrohres (2), einem Förderrohr (3) für das Gemisch aus Kühlmittel und Granulat aus dem Reaktionsrohr, sowie eine an das Förderrohr angeschlossene Trennvorrichtung (4),
dadurch gekennzeichnet,
daß der Trennvorrichtung (4) eine Abführrinne (6) für das Kühlmittel zugeordnet ist, welche in das obere Ende des Reaktionsrohres (2) mündet.

5. Vorrichtung nach Anspruch 4,
dadurch gekennzeichnet,
daß das Reaktionsrohr (2) von einem als Ausgleichbehälter ausgebildeten, Kühlmittel enthaltenden isolierten Behälter (1) umgeben ist, und das Reaktionsrohr (2) Öffnungen (14) zur Kühlmittelzufuhr aus dem isolierten Behälter (1) besitzt.

6. Vorrichtung nach Anspruch 4,
dadurch gekennzeichnet,
daß das Reaktionsrohr (2) durch eine in seiner Wand befindlichen Öffnung (14) und einer Verbindung (16) mit einem Kühlmittel enthaltenden Ausgleichsbehälter (15) verbunden ist, welcher mit einer Füllstandsregulierung (12) ausgestattet ist.

7. Vorrichtung nach einem der Ansprüche 4 bis 6
dadurch gekennzeichnet,
daß die Trennvorrichtung (4) eine Förderschnecke (18) mit einer Siebtrommel (19) ist.

## Claims

1. Process for the granulation of granulatable and/or pelletizable substances in which the substance to be granulated is introduced from at least one product entry (9) into the volume stream of a liquid refrigerant, characterized in that the substance to be granulated from the product entry is introduced as a closed jet into the refrigerant flowing in circulation essentially in the direction of the jet, in that the velocity of the refrigerant stream is equal to or greater than the entry velocity of the substance to be granulated, and in that in the course of this the substance to be granulated is broken up and frozen.

2. Process according to Claim 1, characterized in that the velocity of the refrigerant stream is 1.5 to 4 times that of the entry velocity of the substance to be granulated.

3. Process according to Claim 1 or 2, characterized in that the substance to be granulated is introduced into liquid nitrogen.

4. Apparatus for carrying out the process according to one of Claims 1 to 3 composed of a reaction tube (2), transport element (7) and a product feed apparatus (9) over the upper end of the reaction tube (2), a transport tube (3) for the mixture of refrigerant and granules from the reaction tube and a separation apparatus (4) connected to the transport tube, characterized in that a discharge channel (6) for the refrigerant is assigned to the separation apparatus (4), which discharge channel opens out into the upper end of the reaction tube (2).

5. Apparatus according to Claim 4, characterized in that the reaction tube (2) is surrounded by a refrigerant-containing insulated vessel (1) designed as a compensation vessel and the reaction tube (2) possesses orifices (14) for the feed of refrigerant from the insulated vessel (1).

6. Apparatus according to Claim 4, characterized in that the reaction tube (2) is connected by an orifice (14) situated in its wall and a connection (16) to a refrigerant-containing compensation vessel (15) which is equipped with a level controller (12).

7. Apparatus according to one of Claims 4 to 6, characterized in that the separation apparatus (4) is a conveyor screw (18) having a screen drum (19).

## Revendications

1. Procédé de granulation de substances pouvant être granulées et/ou transformées en boulettes, dans lequel la matière à granuler est introduite en provenance d'au moins une alimentation du produit (9) dans le courant volumique d'un agent refroidissant liquide,
caractérisé en ce que
• la substance à granuler est amenée de l'alimentation du produit sous la forme d'un jet fermé dans le produit réfrigérant s'écoulant essentiellement en circuit dans le sens du jet,
• la vitesse du courant de l'agent réfrigérant est égale ou plus grande que la vitesse d'alimentation de la matière à granuler, et
• en outre la matière à granuler est déchiquetée et gelée.

2. Procédé selon la revendication 1,
caractérisé en ce que
la vitesse du courant de produit réfrigérant est jusqu'à 1,5 à 4 fois aussi grande que la vitesse d'alimentation de la substance à granuler.

3. Procédé selon les revendications 1 ou 2,
caractérisé en ce que
la substance à granuler est introduite dans l'azote liquide.

4. Dispositif pour réaliser le procédé selon une des revendications 1 à 3, se composant d'un tube de réaction (2), d'un élément de transfert et d'un dispositif d'alimentation du produit (9) situé au-dessus de l'extrémité supérieure du tube de réaction (2), un tube d'extraction (3) pour convoyer le mélange d'agent réfrigérant et de granulat hors du tube de réaction, ainsi qu'un dispositif séparateur (4) raccordé au tube de réaction,
caractérisé en ce qu'
au dispositif de séparation (4) est associée une rigole d'évacuation (6) du liquide réfrigérant, qui débouche à la partie supérieure du tube de réaction (2).

5. Dispositif selon la revendication 4,
caractérisé en ce que
le tube réactionnel (2) est entouré d'un réservoir (1) isolé réalisé en réservoir égalisateur, contant du produit réfrigérant, et le tube réactionnel (2) possède des ouvertures (14) pour l'amenée du produit réfrigérant provenant du réservoir (1) isolé.

6. Dispositif selon la revendication 5,
caractérisé en ce que
le tube de réaction (2) est relié par une ouverture (14) se trouvant dans sa paroi et une connexion (16) avec un réservoir égalisateur (15) contenant un liquide réfrigérant, qui est équipé d'une régulation de niveau (12).

7. Dispositif selon une des revendications 4 à 6,
caractérisé en ce que
le dispositif de séparation (4) est une hélice transporteuse (18) avec un tambour tamiseur (19).
